# EUROPÄISCHE PATENTSCHRIFT

(11) **EP 1 019 808 B1**
(45) Veröffentlichungstag und Bekanntmachung des Hinweises auf die Patenterteilung: **13.06.2001**
(21) Anmeldenummer: 98951442.7
(22) Anmeldetag: 21.09.1998
(51) Int. Cl.: G06F 9/44, G06F 9/445

(54) **RESPONSIVES SYSTEM UND VERFAHREN ZUR DIGITALEN SIGNALVERARBEITUNG SOWIE VERFAHREN ZUM BETRIEB EINES RESPONSIVEN SYSTEMS**
RESPONSIVE SYSTEM AND METHOD FOR PROCESSING DIGITAL SIGNALS AND OPERATING METHOD FOR A RESPONSIVE SYSTEM
SYSTEME ET PROCEDE SENSIBLE POUR TRAITEMENT DE SIGNAUX NUMERIQUES ET PROCEDE DE FONCTIONNEMENT D'UN SYSTEME SENSIBLE

(30) Priorität: 02.10.1997 DE 19743758
(43) Veröffentlichungstag der Anmeldung: 19.07.2000
(73) Patentinhaber: SIEMENS AKTIENGESELLSCHAFT, 80333 München (DE)
(72) Erfinder: WAEDT, Karl, D-91052 Erlangen (DE)
(86) Internationale Anmeldenummer: EP9806003
(87) Internationale Veröffentlichungsnummer: WO9918498

(56) Entgegenhaltungen:
- EP-A- 0 217 351
- EP-A- 0 498 130
- EP-A- 0 607 493

## Beschreibung

Die Erfindung betrifft ein responsives System zur Signalverarbeitung mit einer Mehrzahl von Datenverarbeitungseinheiten, die über eine Datenübertragungseinheit miteinander verbunden und auf denen Rechnerprogramme implementiert sind. Die Erfindung betrifft weiterhin ein Verfahren zum Betrieb eines responsiven Systems.

Responsive, d.h. fehlertolerante und echtzeitfähige Systeme zur Signalverarbeitung finden vielseitige Anwendung im Rahmen von industriellen Automatisierungsprozessen. Ein solches responsives System ist aus der DE-PS 44 46 286 bekannt. Das responsive System umfaßt eine Mehrzahl von Datenverarbeitungseinheiten, die miteinander über Datenübertragungseinheiten kommunizieren. Für die auf den Datenverarbeitungseinheiten implementierten Rechnerprogramme ist jeweils ein zugehöriger Aktualisierungsstatus hinterlegt.

Von besonderer Bedeutung ist ein responsives System in einem Automatisierungsprozeß, bei welchem die Einhaltung vorgegebener Zeitschranken oder die Erbringung von Ausgangssignalen innerhalb vorgegebener Zeitintervalle erforderlich ist. Solche Forderungen treten häufig in Fertigungsprozessen, Regelungs- und Steuerungsprozessen sowie Überwachungsprozessen auf, wie beispielsweise in der Sicherheitsleittechnik einer Kernkraftanlage. Die Einhaltung von Zeitschranken oder Zeitintervallen hängt entscheidend ab von der Funktionstüchtigkeit der einzelnen gerätespezifischen- und programmspezifischen Komponenten.

In einem komplexen System, bei dem eine Mehrzahl von Datenverarbeitungseinheiten zu einem großen Datennetz miteinander verbunden ist, sind Fehler in programmspezifischen Komponenten, insbesondere Fehler in einem Rechnerprogramm, von besonderer Bedeutung. Diese Fehler, sogenannte Softwarefehler, können bis zu 60% der Fehler des gesamten Systems ausmachen. Dabei lassen sich die Fehler in drei Gruppen einteilen: Mit 55% treten sogenannte Spezifikationsfehler am häufigsten auf. Mit einem Anteil von etwa 25% sind Wartungsfehler von etwa der gleichen Bedeutung wie Implementierungsfehler, die bei etwa 20% liegen.

Ein Spezifikationsfehler liegt beispielsweise dann vor, wenn ein Signal, das in den jeweiligen Rechnerprogrammen verschiedener Datenverarbeitungseinheiten verarbeitet wird, bei einer Revision oder Änderung einer dem responsiven System zugrundeliegenden Spezifikation gelöscht wird oder neu hinzukommt, wobei die Löschung oder die Hinzufügung dieses Signals nicht auf allen Datenverarbeitungseinheiten gleichzeitig erfolgt. Mit anderen Worten: Ein während einer Revision neu hinzukommendes oder entfallendes Signal führt zu Änderungen sowohl der Rechnerprogramme der jeweils betroffenen Datenverarbeitungseinheiten als auch zu Änderungen der Struktur oder des Aufbaus von zwischen verschiedenen Datenverarbeitungseinheiten zu übertragenden Telegrammen, die das neue Signal übertragen. Dabei kann es, bedingt durch die nicht gleichzeitige Aktualisierung aller relevanten Datenverarbeitungseinheiten, zu Inkompatibilitäten zwischen diesen kommen. Dies kann dazu führen, daß es zu einem Zeitüberlauf bei der Abarbeitung der noch nicht geänderten Rechnerprogramme kommt. Ein derartiger Zeitüberlauf bewirkt einen Ausfall dieser Datenverarbeitungseinheit.

Aufgabe der Erfindung ist es, ein responsives System zur Signalverarbeitung, insbesondere zur digitalen Signalverarbeitung, anzugeben, das auch bei häufiger Revision besonders ausfallsicher ist und somit einen konsistenten Betrieb eines in dem responsiven System integrierten Rechnerprogrammes ermöglicht. Eine weitere Aufgabe besteht darin, ein Verfahren zum konsistenten Betrieb eines responsiven Systems zur Signalverarbeitung anzugeben.

Erfindungsgemäß wird die erstgenannte Aufgabe durch ein responsives System zur Signalverarbeitung gelöst, das ausgestattet ist mit einer Mehrzahl von miteinander über eine Datenübertragungseinheit kommunizierenden Datenverarbeitungseinheiten, wobei auf den Datenverarbeitungseinheiten mindestens ein vom jeweiligen Aktualisierungsstatus abhängiges Rechnerprogramm implementiert ist, wobei die Datenverarbeitungseinheiten derart ausgebildet sind, daß jede Datenverarbeitungseinheit bei jeder Kommunikation einem von ihr erzeugten Signal eine dessen Aktualisierungsstatus charakterisierende Revisionskennzahl zuordnet, wobei eine das Signal empfangende Datenverarbeitungseinheit einen Vergleich durchführt, ob die das Signal charakterisierende Revisionskennzahl mit einer für dieses Signal hinterlegten Revisionskennzahl übereinstimmt, und wobei die das Signal empfangende Datenverarbeitungseinheit bei Gleichheit dieser Revisionskennzahlen eine reguläre Verarbeitung des Signals durchführt, anderenfalls unterläßt.

Die Erfindung geht dabei von der Überlegung aus, daß eine Abschaltung oder ein Ausfall eines eine Anzahl von Datenverarbeitungseinheiten umfassenden responsiven Systems, welches z.B. in der Sicherheitsleittechnik eines Druckwasserreaktors eingesetzt ist, auch bei einer Änderung eines einzelnen Rechnerprogrammes sicher vermieden sein sollte. Insbesondere bei einem Sicherheitsleittechniksystem, bei dem die Datenverarbeitungseinheiten redundant ausgeführt sein können, kann es bei einer Revision der Rechnerprogramme (einer sogenannten Änderung der Spezifikation) zu einer zeitlich versetzten Aktualisierung der relevanten Datenverarbeitungseinheiten kommen. Dies führt gewöhnlich zu Inkompatibilität zwischen diesen Datenverarbeitungseinheiten. Das responsive System sollte daher auch gegen Änderungen nur einer Datenverarbeitungseinheit unempfindlich sein.

Mit anderen Worten: Änderungen des Rechnerprogramms oder der Software, z.B. das Löschen von Signalen oder das Hinzufügen von neuen Signalen, sollten zunächst nur in einer Datenverarbeitungseinheit möglich sein. Dazu weisen die Telegramme, in denen die übermittelten Signale enthalten sind, eine entsprechende Statusinformation oder einen Aktualisierungsstatus auf. Durch einen Vergleich dieses Aktualisierungsstatus mit dem in der empfangenden Datenverarbeitungseinheit hinterlegten Aktualisierungsstatus in bezug darauf, ob das Signal auf derselben oder einer geänderten Spezifikation beruht, wird die Kompatibilität der empfangenden Datenverarbeitungseinheit mit dem empfangenden Signal festgestellt. Bei Gleichheit der Spezifikationen kann eine entsprechende Statusinformation eingestellt werden, wie z.B. "Status OK". Bei Ungleichheit kann entsprechend die Statusinformation "Status Error" eingestellt werden.

Vorteilhafterweise umfaßt jede Datenverarbeitungseinheit ein Analysemodul zur Durchführung des Vergleichs. Um den Vergleich durchzuführen, umfaßt das responsive System zweckmäßigerweise eine erste Datenbank, in der der jeweilige Aktualisierungsstatus der Signale und/oder der Rechnerprogramme hinterlegt ist, und eine zweite Datenbank, in welcher zukünftige Änderungen oder Revisionen von jeweils zu ändernden Signalen und/oder jeweils zu ändernden Rechnerprogrammen hinterlegt sind.

Zur Aktualisierung der Rechnerprogramme und/oder der Signale der Datenverarbeitungseinheiten und demzufolge auch zur Überwachung der Konsistenz aller Dätenverarbeitungseinheiten ist zweckmäßigerweise ein Servicesystem vorgesehen.

Die zweitgenannte Aufgabe wird erfindungsgemäß durch ein Verfahren zum konsistenten Betrieb eines responsiven Systems zur digitalen Signalverarbeitung mit einer Mehrzahl von miteinander über eine Datenübertragungseinheit kommunizierenden Datenverarbeitungseinheiten gelöst, wobei auf den Datenverarbeitungseinheiten mindestens ein vom jeweiligen Aktualisierungsstatus abhängiges Rechnerprogramm implementiert ist, wobei bei jeder Kommunikation einem von einer Datenverarbeitungseinheit erzeugten Signal eine seinen Aktualisierungsstatus charakterisierende Revisionskennzahl zugeordnet wird, wobei in einer empfangenden Datenverarbeitungseinheit ein Vergleich durchgeführt wird, ob die das Signal charakterisierende Revisionskennzahl mit einer für dieses Signal hinterlegten Revisionskennzahl übereinstimmt, und wobei bei Gleichheit dieser Revisionskennzahlen eine reguläre Verarbeitung des Signals erfolgt, anderenfalls unterbleibt.

Zweckmäßigerweise wird das Signal in einem Datentelegramm zwischen zwei Datenverarbeitungseinheiten ausgetauscht. Vorteilhafterweise ist die hinterlegte Revisionskennzahl in einem Analysemodul der empfangenden Datenverarbeitungseinheit und/oder in einer Datenbank gespeichert. Mittels dieser in dem Analysemodul und/oder in der Datenbank gespeicherten Revisionskennzahl wird der Vergleich der Spezifikationen durchgeführt.

Vorzugsweise umfaßt das Datentelegramm einen Informationsteil und einen Signalteil. Beispielsweise umfaßt der Informationsteil des Datentelegramms Informationen, insbesondere Identifikationsnummern der empfangenden bzw. der sendenden Datenverarbeitungseinheiten, sowie Informationen darüber, ob die sendende Datenverarbeitungseinheit sich im Test oder im Normalbetrieb befindet. Der Signalteil umfaßt die in der empfangenden Datenverarbeitungseinheit zu verarbeitenden Signale mit den jeweils diese charakterisierenden Revisionskennzahlen.

Zweckmäßigerweise wird die das Signal charakterisierende und die für das Signal hinterlegte Revisionskennzahl bei einer dieses Signal betreffenden Revision oder Änderung der Spezifikation um den Wert Eins erhöht. Wird ein Signal gelöscht oder entfernt, wird die für dieses Signal hinterlegte und die das Signal charakterisierende Revisionskennzahl vorteilhafterweise mit einem negativen Vorzeichen versehen.

Die mit der Erfindung erzielten Vorteile bestehen insbesondere darin, daß durch den Vergleich der ein empfangenes Signal charakterisierenden Revisionskennzahl mit der für dieses Signal hinterlegten Revisionskennzahl nur solche Signale in der empfangenden Datenverarbeitungseinheit verarbeitet werden, die auf ein und derselben Spezifikation beruhen. Somit ist das Vorliegen oder Nichtvorliegen der die Kompatibilität der von einer anderen Datenverarbeitungseinheit empfangenden Signale mit den in der empfangenden Datenverarbeitungseinheit zu verarbeitenden Signalen feststellbar. Demzufolge sind Ausfälle der Datenverarbeitungseinheiten bedingt durch Spezifikationsfehler oder Wartungsfehler weitgehend vermieden. Somit ist ein derartig aufgebautes responsives System, in welchem das Verfahren zum konsistenten Betrieb, insbesondere zur konsistenten Wartung, eingesetzt wird, hinsichtlich seiner Verfügbarkeit sowie seines Einsatzes als Automatisierungssystem in einer Kernkraftanlage besonders wirtschaftlich und effektiv.

Der Erfindung beschrieben in EP-A-0 607 493 liegt die Aufgabe zugrunde, ein bezüglich des Auswechselns von Software flexibles Steuerungssystem sowie ein Verfahren zum Auswechseln von Software in einem Steuerungssystem während des Betriebs, d.h. ohne Betriebsunterbrechung anzugeben. Diese Aufgabe wird dadurch gelöst, daß in einem Reaizeit-Steuerungssystem mit einem Steuerungsprozessor und einem Software-System mit einem Betriebssystem und einer Mehrzahl von Software-Einheiten oder Dienstleistungsmodulen SPU,die individuell in den Arbeitsspeicher des Steuerungsprozessor ladbar sind, die Software-Einheiten zur Durchführung ihrer Steuerungsaufgaben durch Meldungen M über das Betriebssystem miteinander kommunizieren, worin für den Nachrichtenaustausch zwischen zwei Software-Einheiten jede Meldung neben einer systemweit eindeutigen Bezeichnung der adressierten Software-Einheit ein Versionskennzeichen UT (Upgrade Token) enthält, das dem Betriebssystem anzeigt, an welche Version einer Software-Einheit die entsprechende Meldung gesendet werden soll. Jeder Anreiz (Ereignis), der eine Meldung zwischen zwei Software-Einheiten auslöst, kann eindeutig als äußerer oder innerer Anreiz spezifiziert werden. Ein äußerer Anreiz ist eine Meldung eines dritten Software-Moduls, während jeder andere Anreiz ein innerer Anreiz (z.B. Hardware-Interrupt) ist. Eine Software-Einheit ist eine Ereignisquelle (Event Source), wenn der Software-Einheit eine das Ereignis beschreibende Meldung zugesandt wird. Bei der Bearbeitung des inneren Ereignisses durch die Ereignisquelle entstehen Folge-Meldungen, die mit einem Versionskennzeichen UT versehen werden. Welches Versionskennzeichen zu benutzen ist, wird der Ereignisquelle von einem Erweiterungsmanager LUM mitgeteilt. Das Versionskennzeichen einer neu geladenen Software-Einheit wird nur den Ereignisquellen mitgeteilt. Durch das Versionskennzeichen in den Folge-Meldungen wird festgelegt, ob die sich an den Ereignis anschließenden Aktionen mit Hilfe der neuen Software oder der alten Software durchgeführt werden sollen.Bei einem Software-Wechsel können beide Software-Versionen während einer Umschaltdauer aktiviert bleiben, wobei von Einheiten mit älterer Software kommende Meldungen von der alten Software-Version und von Einheiten mit neuer Software kommende Meldungen mit der neuen Software-Version bearbeitet werden können.

EP-A-0 498 130 beschreibt daß jede Einheit einer Anzahl, von interaktiven Systemeinheiten mit einem Versions-Kennzeichen assoziiert ist, das in einem Speicherplatz gespeichert ist,der für alle Systemeinheiten zugänglich ist. Jede Einheit liest das Versions-Kennzeichen der Einheit, womit sie interaktiv arbeiten muß, und vergleicht den Wert des Versions-Kennzeichens mit einem intern gespeicherten Kompatibilitäts-Verzeichnis, um zu entscheiden, ob die andere Einheit die Bedingung für die Kompatibilität mit der überprüfenden Einheit erfüllt. Das Kompatibilitäts-Verzeichnis beinhaltet einen Minimum-Wert, der das Minimum-Niveau der überprüften Einheit darstellt, das für Kompatibilität mit der überprüfenden Einheit verlangt wird.

EP-A-0 217 351 beschreibt, daß eine Vergleicher-Einheit bestimmt, ob ein Versions-Kennzeichen eines Kommunikations-Steuerprogramms, das in einer Einheit gespeichert ist, neuer ist als ein Versions-Kennzeichen eines Kommunikations-Steuerprogramms in einer anderen Einheit.

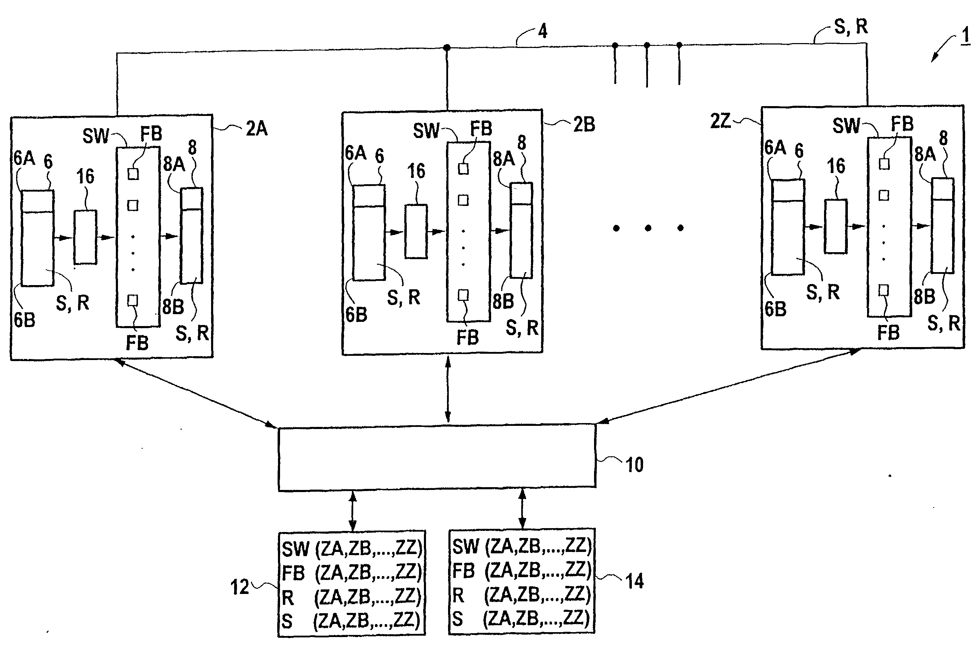

Ein Ausführungsbeispiel der Erfindung wird anhand einer Zeichnung näher erläutert. Darin zeigt die Figur schematisch ein responsives System zur digitalen Signalverarbeitung.

Das in der Figur schematisch dargestellte responsive System 1 umfaßt eine große Anzahl von Datenverarbeitungseinheiten 2A bis 2Z, die über eine Datenübertragungseinheit 4 miteinander verbunden sind. Die Datenübertragungseinheit 4 ist eine standardisierte Übertragungsleitung, z.B. ein Ethernet-Koaxialkabel, und weist standardisierte, nicht dargestellte Übertragungselemente, wie Verstärker, Repeater oder Bridges, auf. Die Datenverarbeitungseinheiten 2A bis 2Z sind mittels der Datenübertragungseinheit 4 zu einem Rechnernetz verbunden. Das responsive System 1 ist insbesondere für die Steuerung und Überwachung einer technischen Anlage, insbesondere einer Kernkraftanlage, geeignet.

Jede Datenverarbeitungseinheit 2A bis 2Z ist zur Verarbeitung von zwei Arten von Telegrammen geeignet. Die eine Art ist ein Empfangstelegramm 6, das in einer Datenverarbeitungseinheit 2A von einer anderen Datenverarbeitungseinheit 2B empfangen wird. Die andere Art ist ein Sendetelegramm 8, das von einer Datenverarbeitungseinheit 2A zu einer anderen Datenverarbeitungseinheit 2B übertragen oder gesendet wird. Dabei umfaßt jedes Empfangstelegramm 6 und jedes Sendetelegramm 8 jeweils einen Telegrammkopf 6A bzw. 8A und einen Signalteil 6B bzw. 8B.

Beim Betrieb der Kernkraftanlage werden über die Datenübertragungseinheit 4 große Datenmengen in Form von Steuerbefehlen und Zustandsmeldungen sowie Störmeldungen, im weiteren als Signale S bezeichnet, zwischen den Datenverarbeitungseinheiten 2A bis 2Z übertragen. Dabei werden die Signale S in Telegrammen zusammengefaßt. Bei unterschiedlichem Aktualisierungsstatus einiger Datenverarbeitungseinheiten 2A bis 2Z könnte es gemäß dem Stand der Technik zu Inkompatibilitäten von empfangenen Signalen S einer anderen Datenverarbeitungseinheit 2A mit den zu verarbeitenden Signalen S der empfangenden Datenverarbeitungseinheit 2B kommen. Dies würde zu Instabilitäten in der Bearbeitung der Rechnerprogramme der empfangenden Datenverarbeitungseinheit 2A, 2B führen. Diese Instabilitäten werden durch im folgenden beschriebenen Maßnahmen sicher vermieden.

Darüber hinaus ist jede Datenverarbeitungseinheit 2A bis 2Z mit einem Servicesystem 10 verbunden. Das Servicesystem 10 überwacht den Telegrammverkehr zwischen den Datenverarbeitungseinheiten 2.

Auf jeder Datenverarbeitungseinheit 2A bis 2Z ist mindestens ein Rechnerprogramm SW implementiert, das modular aus einer Anzahl von Funktionsbausteinen FB aufgebaut ist. Jede Änderung in der Spezifikation des responsiven Systems 1, z.B. neu hinzukommende Signale S oder zu löschende Signale S, wird mittels des Servicesystems 10 an die betroffenen Datenverarbeitungseinheiten 2A bis 2Z übertragen. Bei einer derartigen Anderung der Spezifikation werden zum einen die Funktionsbausteine FB auf den betreffenden Datenverarbeitungseinheiten 2A bis 2Z geändert und somit angepaßt. Zum anderen wird die Struktur oder der Aufbau der betroffenen Empfangstelegramme 6 sowie der betroffenen Sendetelegramme 8 hinsichtlich der neuen Signale S oder der zu löschenden Signale S geändert und somit angepaßt.

Das responsive System 1 umfaßt eine erste Datenbank 12 und eine zweite Datenbank 14, die jeweils mit dem Servicesystem 10 verbunden sind. In der ersten Datenbank 12 ist die aktuelle Spezifikation oder der jeweilige Aktualisierungsstatus der Rechnerprogramme SW mit den jeweils dazugehörigen Funktionsbausteinen FB aller Datenverarbeitungseinheiten 2A bis 2Z sowie der Aufbau der Empfangstelegramme 6 und der Sendetelegramme 8 aller Datenverarbeitungseinheiten 2Abis 2Z enthalten. Darüber hinaus ist in der ersten Datenbank 12 zu jedem Rechnerprogramm SW sowie zu jedem Signal S eines jeden Empfangstelegrammes 6 und eines jeden Sendetelegrammes 8 als Aktualisierungsstatus jeweils eine Revisionskennzahl R hinterlegt.

Die zweite Datenbank 14 ist hinsichtlich ihrer Struktur identisch mit der ersten Datenbank 12. In der zweiten Datenbank 14 sind ebenfalls alle Rechnerprogramme SW sowie alle Signale S mit der jeweils dazugehörigen aktuellen Revisionskennzahl R hinterlegt. Änderungen der Spezifikation oder Revisionen von nun jeweils zu ändernden Rechnerprogrammen SW und/oder zu ändernden Signalen S werden in die zweite Datenbank 14 eingegeben oder aufgenommen.

Als frühere oder aktuelle Revisionskennzahl R wird sowohl in der ersten Datenbank 12 als auch in der zweiten Datenbank 14 jeweils eine ganze Zahl gespeichert. Beispielsweise erhalten sämtliche Signale S, die während einer ersten Änderung der Spezifikation, einer sogenannten ersten Revision, geändert werden, die Revisionskennzahl R = +1. Die bei der nächsten Spezifikationsänderung geänderten Signale S erhalten die Revisionskennzahl R = +2, d.h. eine um den Wert 1 höhere Revisionskennzahl R. Die in der zweiten Änderung gelöschten Signale S erhalten die Revisionskennzahl R =-2, wobei das negative Vorzeichen die Löschung des Signals S kennzeichnet. Neu hinzukommende Signale S oder Rechnerprogramme SW werden am Ende des Telegramms bzw. der zweiten Datenbank 14 angehängt, wobei diese Signale S eine positive Revisionskennzahl R erhalten. Bei jeder weiteren Spezifikationsänderung oder Revision wird analog verfahren. D.h. bei einer vierten Spezifikationsänderung wird als Revisionskennzahl R den geänderten Signalen S die Zahl R = +4 oder R = -4 gegeben.

Die Spezifikationsänderungen werden nach ihrer Eintragung in der zweiten Datenbank 14 mittels des Servicesystems 10 an die betroffenen Datenverarbeitungseinheiten 2A bis 2Z übertragen. Ein gelöschtes Signal S wird erst dann in allen Empfangstelegrammen 6 sowie Sendetelegrammen 8 gelöscht, wenn das Rechnerprogramm SW in allen Datenverarbeitungseinheiten 2A bis 2Z aktualisiert worden ist. Dadurch wird gewährleistet, daß die Änderungen in den Rechnerprogrammen SW aller betroffenen Datenverarbeitungseinheiten 2A bis 2Z auch tatsächlich durchgeführt worden sind.

Nach der Aktualisierung aller betroffenen Datenverarbeitungseinheiten 2A bis 2Z, aller betroffenen Empfangstelegramme 6 sowie aller betroffenen Sendetelegramme 8 entsprechend der durchgeführten Revision wird die aktualisierte Spezifikation mit Hilfe des Servicesystems 10 in die erste Datenbank 12 übernommen.

Nachfolgende Spezifikationsänderungen oder Revisionen werden wiederum zuerst in der zweiten Datenbank 14 hinterlegt. Mit anderen Worten: Ist der Inhalt der ersten Datenbank 12 mit dem Inhalt der zweiten Datenbank 14 identisch, sind alle Datenverarbeitungseinheiten 2A bis 2Z an dieselbe Spezifikation angepaßt.

Um einen Ausfall einer Datenverarbeitungseinheit 2A bis 2Z, die beispielsweise noch nicht aktualisiert worden ist, zu vermeiden, umfaßt jede Datenverarbeitungseinheit 2A bis 2Z weiterhin ein Analysemodul 16. Das Analysemodul 16 überprüft im Betrieb jedes in dem Empfangstelegramm 6 enthaltene Signal S einer anderen Datenverarbeitungseinheit 2A bis 2Z hinsichtlich dessen Richtigkeit anhand der in der empfangenden Datenverarbeitungseinheit 2A bis 2Z hinterlegten Revisionskennzahl R und der zugeordneten aktuellen Revisionskennzahl R. Diese Prüfung im Betrieb wird im folgenden näher erläutert:

Für die Prüfung ist in dem jeweiligen Analysemodul 16 die entsprechende Spezifikation der zugehörigen Datenverarbeitungseinheit 2A bis 2Z, d.h. die früheren oder die einer aktuellen Anderung zugrundeliegenden Revisionskennzahlen R der jeweiligen Rechnerprogramme SW und der Signale S, hinterlegt. Die Datenverarbeitungseinheit 2B, die ein Sendetelegramm 8 an eine andere Datenverarbeitungseinheit 2A überträgt, ordnet jedem erzeugten und zu übertragenden Signal S jeweils die dessen Aktualisierungsstatus charakterisierende Revisionskennzahl R zu.

Dieses Sendetelegramm 8 wird von der anderen Datenverarbeitungseinheit 2A als Empfangstelegramm 6 empfangen. In der empfangenden Datenverarbeitungseinheit 2A wird dann die das Signal S charakterisierende Revisionskennzahl R mit der für dieses Signal S hinterlegten Revisionskennzahl R mittels des Analysemoduls 16 in Bezug auf Gleichheit verglichen. Bei Gleichheit der empfangenden Revisionskennzahl R mit der hinterlegten Revisionskennzahl R', d.h. bei Gleichheit der Spezifikationen der beiden kommunizierenden Datenverarbeitungseinheiten 2A, 2B, erhält das Signal S eine Statusinformation "Status = ok" und wird der Signalverarbeitung gemäß dem Rechnerprogramm SW zugeführt. Bei Ungleichheit erhält das Signal S die Statusinformation "Status = Error" und wird nicht verarbeitet.

Die Aktualisierung des Analysemoduls 16 bezüglich einer neuen Spezifikation erfolgt durch die an die zugehörige Datenverarbeitungseinheit 2A bis 2Z mittels des Servicesystems 10 übertragene Spezifikationsänderung. Dabei werden die in dem Analysemodul 16 hinterlegten früheren Revisionskennzahlen R der Signale S und/oder der Rechnerprogramme SW durch die aktuellen Revisionskennzahlen R ersetzt.

Die mit der Erfindung erzielten Vorteile bestehen insbesondere darin, daß auch nach Spezifikationsänderungen in den einzelnen Datenverarbeitungseinheiten 2 mittels des Vergleichs der Revisionskennzahlen R ein konsistenter und transparenter Betrieb gewährleistet ist. Das responsive System 1 zur digitalen Signalverarbeitung ist somit besonders zu einer inkrementellen Wartung geeignet.

## Patentansprüche

1. Responsives System (1) zur digitalen Signalverarbeitung mit einer Mehrzahl von miteinander über eine Datenübertragungseinheit (4) kommunizierenden Datenverarbeitungseinheiten (2A bis 2Z), wobei auf den Datenverarbeitungseinheiten (2) mindestens ein vom jeweiligen Aktualisierungsstatus abhängiges Rechnerprogramm (SW) implementiert ist,
**dadurch gekennzeichnet**, daß die Datenverarbeitungseinheiten (2A bis 2Z) derart ausgebildet sind, daß
a) jede Datenverarbeitungseinheit (2A bis 2Z) bei jeder Kommunikation einem von ihr erzeugten Signal (S) eine dessen Aktualisierungsstatus charakterisierende Revisionskennzahl (R) zuordnet,
b) eine das Signal (S) empfangende Datenverarbeitungseinheit (2A bis 2Z) einen Vergleich durchführt, ob die das empfangene Signal (S) charakterisierende Revisionskennzahl (R) mit einer für dieses Signal (S) hinterlegten Revisionskennzahl (R) übereinstimmt, und
c) die das Signal (S) empfangende Datenverarbeitungseinheit (2A bis 2Z) bei Gleichheit der empfangenen Revisionskennzahl (R) mit der hinterlegten Revisionskennzahl (R) eine reguläre Verarbeitung des Signals (S) durchführt, anderenfalls unterläßt.

2. Responsives System (1) nach Anspruch 1,
**dadurch gekennzeichnet**, daß jede Datenverarbeitungseinheit (1) ein Analysemodul (16) zur Durchführung des Vergleichs umfaßt.

3. Responsives System (1) nach Anspruch 1 oder 2, **gekennzeichnet durch** eine erste Datenbank (12), in der der jeweilige Aktualisierungsstatus der Signale (S) und/oder der Rechnerprogramme (SW) aller Datenverarbeitungseinheiten (2A bis 2Z) hinterlegt ist, und eine zweite Datenbank (14), in welcher zukünftige Änderungen oder Revisionen von jeweils zu ändernden Signalen (S) und/oder jeweils zu ändernden Rechnerprogrammen (SW) hinterlegt sind.

4. Responsives System (1) nach einem der Ansprüche 1 bis 3,
**dadurch gekennzeichnet**, daß ein Servicesystem (10) zur Aktualisierung der Rechnerprogramme (SW) und/oder der Signale (S) der Datenverarbeitungseinheiten (2A bis 2Z) vorgesehen ist.

5. Verfahren zum Betrieb eines responsiven Systems (1) zur digitalen Signalverarbeitung mit einer Mehrzahl von miteinander über eine Datenübertragungseinheit (4) kommunizierenden Datenverarbeitungseinheiten (2A bis 2Z), wobei auf den Datenverarbeitungseinheiten (2A bis 2Z) mindestens ein vom jeweiligen Aktualisierungsstatus abhängiges Rechnerprogramm (SW) implementiert ist,
**dadurch gekennzeichnet**, daß
a) bei jeder Kommunikation einem von einer Datenverarbeitungseinheit (2A bis 2Z) erzeugten Signal (S) eine seinen Aktualisierungsstatus charakterisierende Revisionskennzahl (R) zugeordnet wird,
b) in einer empfangenden Datenverarbeitungseinheit (2A bis 2Z) ein Vergleich durchgeführt wird, ob die das empfangene Signal (S) charakterisierende Revisionskennzahl (R) mit einer für dieses Signal (S) hinterlegten Revisionskennzahl (R) übereinstimmt, und
c) bei Gleichheit dieser Revisionskennzahlen (R) eine reguläre Verarbeitung des Signals (S) erfolgt, anderenfalls unterbleibt.

6. Verfahren nach Anspruch 5,
**dadurch gekennzeichnet**, daß die hinterlegte Revisionskennzahl (R) in einem Analysemodul (16) der empfangenden Datenverarbeitungseinheit (2A bis 2Z) und/oder in einer Datenbank (12, 14) gespeichert ist.

7. Verfahren nach Anspruch 6,
**dadurch gekennzeichnet**, daß die das Signal (S) charakterisierende und die für das Signal (S) hinterlegte Revisionskennzahl (R) bei einer dieses Signal (S) betreffenden Revision um den Wert Eins erhöht wird.

8. Verfahren nach Anspruch 6 oder 7,
**dadurch gekennzeichnet**, daß die das Signal (S) charakterisierende und die für das Signal (S) hinterlegte Revisionskennzahl (R) bei einem Entfernen dieses Signals (S) mit einem negativen Vorzeichen versehen wird.

## Claims

1. Responsive system (1) for digital signal processing having a plurality of data processing units (2A to 2Z) which communicate with one another via a data transmission unit (4), in which case at least one computer program (SW) which is dependent on the respective update status, is implemented on the data processing units (2),
characterized in that the data processing units (2A to 2Z) are designed in such a manner that
a) during each communication, each data processing unit (2A to 2Z) assigns to a signal (S) produced by it a revision identity (R) characterizing its update status,
b) a data processing unit (2A to 2Z) which receives the signal (S) carries out a comparison to determine whether the revision identity (R) characterizing the received signal (S) matches a revision identity (R) stored for this signal (S), and
c) if the received revision identity (R) matches the stored revision identity (R), the data processing unit (2A to 2Z) receiving the signal (S) carries out regular processing of the signal (S), otherwise this is not done.

2. Responsive system (1) according to Claim 1,
characterized in that each data processing unit (1) comprises an analysis module (16) for carrying out the comparison.

3. Responsive system (1) according to Claim 1 or 2,
characterized by a first database (12) in which the respective update status of the signals (S) and/or the computer programs (SW) of all the data processing units (2A to 2Z) are stored, and a second database (14) in which future modifications or revisions of respective signals (S) to be modified and/or respective computer programs (SW) to be modified are stored.

4. Responsive system (1) according to one of Claims 1 to 3,
characterized in that a service system (10) is provided for updating the computer programs (SW) and/or the signals (S) of the data processing units (2A to 22).

5. Method for operation of a responsive system (1) for digital signal processing having a plurality of data processing units (2A to 2Z) which communicate with one another via a data transmission unit (4), in which case at least one computer program (SW), which depends on the respective update status, is implemented on the data processing units (2A to 2Z),
characterized in that
a) for each communication, a signal (S) produced by a data processing unit (2A to 2Z) is assigned a revision identity (R) characterizing its update status,
b) a comparison is carried out in a receiving data processing unit (2A to 2Z) to determine whether the revision identity (R) characterizing the received signal (S) matches a revision identity (R) stored for this signal (S), and
c) if these revision identities (R) match, regular processing of the signal (S) is carried out, otherwise this is not done.

6. Method according to Claim 5,
characterized in that the stored revision identity (R) is stored in an analysis module (16) in the receiving data processing unit (2A to 2Z) and/or in a database (12, 14).

7. Method according to Claim 6,
characterized in that the revision identity (R) characterizing the signal (S) and the revision identity (R) stored for the signal (S) are incremented by the value one for a revision relating to this signal (S).

8. Method according to Claim 6 or 7,
characterized in that the revision identity (R) characterizing the signal (S), and the revision identity (R) stored for the signal (S), are provided with a negative mathematical sign when this signal (S) is removed.

## Revendications

1. Système sensible (1) destiné au traitement de signaux numériques et comportant plusieurs unités de traitement de données (2A à 2Z) communiquant par l'intermédiaire d'une unité de transmission de données (4), dans lequel au moins un programme informatique (SW) dépendant de l'état d'actualisation respectif est installé sur les unités de traitement de données (2),
caractérisé par le fait que les unités de traitement de données (2A à 2Z) sont conçues de telle sorte que
a) chaque unité de traitement de données (2A à 2Z) associe lors de chaque communication à un signal (S) produit par elle-même un numéro de révision (R) caractérisant son état d'actualisation,
b) une unité de traitement de données (2A à 2Z) recevant le signal (S) effectue une comparaison pour savoir si le numéro de révision (R) caractérisant le signal (S) coïncide avec un numéro de révision (R) mémorisé pour ce signal (S), et
c) l'unité de traitement de données (2A à 2Z) recevant le signal (S) effectue un traitement régulier du signal (S) si le numéro de révision (R) reçu est identique au numéro de révision (R) mémorisé et elle s'en abstient sinon.

2. Système sensible (1) selon la revendication 1,
caractérisé par le fait que chaque unité de traitement de données (1) comprend un module d'analyse (16) pour la mise en oeuvre de la comparaison.

3. Système sensible (1) selon la revendication 1 ou 2,
caractérisé par une première base de données (12), dans laquelle l'état d'actualisation respectif des signaux (S) et/ou des programmes informatiques (SW) de toutes les unités de traitement de données (2A à 2Z) est mémorisé, et par une deuxième base de données (14), dans laquelle des modifications ou révisions futures de signaux (S) respectivement à modifier et/ou de programmes informatiques (SW) respectivement à modifier sont mémorisées.

4. Système sensible (1) selon l'une des revendications 1 à 3,
caractérisé par le fait qu'un système de service (10) est prévu pour actualiser les programmes informatiques (SW) et/ou les signaux (S) des unités de traitement de données (2A à 2Z).

5. Procédé pour le fonctionnement d'un système sensible (1) destiné au traitement de signaux numériques et comportant plusieurs unités de traitement de données (2A à 2Z) communiquant par l'intermédiaire d'une unité de transmission de données (4), dans lequel au moins un programme informatique (SW) dépendant de l'état d'actualisation respectif est installé sur les unités de traitement de données (2A à 2Z),
caractérisé par le fait que
a) lors de chaque communication, on associe à un signal (S) produit par une unité de traitement de données (2A à 2Z) un numéro de révision (R) caractérisant son état d'actualisation,
b) dans une unité de traitement de données (2A à 2Z) réceptrice, on effectue une comparaison pour savoir si le numéro de révision (R) caractérisant le signal (S) reçu coïncide avec un numéro de révision (R) mémorisé pour ce signal (S), et
c) si ces numéros de révision (R) sont identiques, on effectue un traitement régulier du signal (S) et on s'en abstient sinon.

6. Procédé selon la revendication 5,
caractérisé par le fait que le numéro de révision (R) mémorisé est mémorisé dans un module d'analyse (16) de l'unité de traitement de données (2A à 2Z) et/ou dans une base de données (12, 14).

7. Procédé selon la revendication 6,
caractérisé par le fait que le numéro de révision (R) caractérisant le signal (S) et le numéro de révision (R) mémorisé pour le signal (S) sont augmentés chacun de la valeur 1 lors d'une révision concernant ce signal (S).

8. Procédé selon la revendication 6 ou 7,
caractérisé par le fait que le numéro de révision (R) caractérisant le signal (S) et le numéro de révision (R) mémorisé pour le signal (S) sont munis chacun d'un signe négatif lors d'une suppression de ce signal (S).
